Europäisches Patentamt

European Patent Office

Office européen des brevets

(11) Publication number: **0 217 441**
**B1**

(12) EUROPEAN PATENT SPECIFICATION

(45) Date of publication of patent specification: **19.09.90**

(21) Application number: **86201543.5**

(22) Date of filing: **09.09.86**

(51) Int. Cl.⁵: **B 60 R 25/04**

(54) Combination device for cutting-off and restoring the flow of a fluid, in particular for motor vehicles with internal combustion engines.

(30) Priority: **30.09.85 IT 356485**

(43) Date of publication of application:
**08.04.87 Bulletin 87/15**

(45) Publication of the grant of the patent:
**19.09.90 Bulletin 90/38**

(84) Designated Contracting States:
**AT BE CH DE FR GB LI LU NL SE**

(56) References cited:
**FR-A- 440 574**
**FR-A- 847 894**
**FR-A-1 499 317**
**US-A-3 670 836**

(73) Proprietor: **Datei, Romolo**
**Piazza Pontida, 16**
**I-24100 Bergamo (IT)**

(72) Inventor: **Datei, Romolo**
**Piazza Pontida, 16**
**I-24100 Bergamo (IT)**

(74) Representative: **Robba, Eugenio et al**
**Studio "INTERPATENT" via Caboto 35**
**I-10129 Turin (IT)**

Courier Press, Leamington Spa, England.

## Description

The present invention relates to a combination device according to the pre-characterising portions of independent claims 1 and 6 for cutting-off and restoring the flow of a fluid, for example, for motor vehicles with an internal combustion engine and in particular a Diesel engine, inserted in a line for feeding the fuel to the engine.

At present numerous safety devices are known for protecting motor vehicles from thefts which are more and more frequent.

The best known and economical ones are the so-called "antitheft steering locks" and others operating on the same principle, which prevent complete or partial rotation of the steering wheel. The former has proved not very efficient whereas the latter, which usually are chains wound around the steering wheel and a seat of the motor vehicle, or rods anchored to the steering wheel and a control pedal of the vehicle such as the brake pedal, are rather inconvenient to apply and remove.

Then there are rather expensive electronic devices which act on the electrical equipment of the motor vehicle when they are not switched off within a determined period of time or with an appropriate key.

Usually these devices set into operation the acoustic horn so that the thief will prefer to slip off because the noise will attract attention.

A disadvantage of these devices is that sometimes they are set into operation also for reasons that are independent from a theft, for example, because a part of the circuit has got out of order, and as this often happens, and sometimes in the midst of the night, the user will prefer to switch it off.

Together with this device at present often another one is installed which is likewise electronical and switched on and off by supersonic devices and which acts on the ignition circuit of the engine, so that it is extremely noiseless.

However, also in this case it sometimes happens that the control device is inadvertently actuated by the user himself in conditions of operation, for example, when the windows are open and the motor vehicle is running.

In this latter case the safety device is therefore dangerous even for the safety of the occupants of the motor vehicle which might suddenly stop, for example, on overtaking.

FR—A—440 574 discloses a security combination cock according to the pre-characterising portions of claims 1 and 6 for automobiles located in the fuel line. This cock comprises a containment body with frusto-conical shut-off elements provided with non linear holes for the passage of the fuel. The opposite ends of each shut-off element project from the containment body, and carry at one side a graduated head and at the other side a fixing nut.

FR—A—847 854 discloses an anti-theft combination device for automobiles comprising a plurality of shut-off cylinders rotatably mounted on a shaft and urged one against the other by opposed springs. Each cylinder is provided with a hole, which may be aligned with the hole of the adjacent cylinders by rotating the cylinder. Rotation is obtained by exerting a tangential force on the cylindrical surface thereof.

It is therefore the object of the present invention to eliminate the above-mentioned disadvantages, and the invention, as characterized in the independent claims 1 and 6, mainly solves the problem of providing a safety device that is really sound and efficient and is particularly useful against theft of motor vehicles.

One of the advantages of the present invention consists in its simplicity of construction which makes it extremely economical and at the same time efficient. In fact, for its manufacture are sufficient a containment body, provided with a hole with a tortuous path and inserted in the fuel feed conduit of the engine, and at least two shut-off elements adapted to restore the continuity of the hole in the containment body only in a well predetermined position thereof, so as to provide a combination device.

Another advantage of the present invention is the resistance to tampering afforded by the present device as it is not possible to arrive at the predetermined combination by introducing a rod-like element into and along the hole of the containment body as the hole has a tortuous path and prevents the rod-like element from reaching the shut-off elements.

Of particular importance is the fact that it is possible for the device to be switched on and off only by the user and not by certain ambient conditions or the like, so that there is no risk for the device being suddenly set into operation during use of the vehicle. In this regard, it is interesting to note the possibility of inserting in the electric feed circuit of carburetter engines a switch which is directly or indirectly actuated by one or more of the shut-off elements.

The device according to the present invention is particularly convenient as the shut-off elements can be actuated by stepping motors so that the controls for connection and disconnection of the device can be transferred to the interior of the passenger compartment.

By virtue of its sturdiness, the device according to the invention can be mounted also on vehicles subjected to severe operating conditions, such as trucks, earth moving machines or the like.

The invention will now be described in detail with reference to the drawings which represent two embodiments thereof merely by way of not-limiting examples.

Fig. 1 shows an axial section, illustrating also the hole in the containment body, of a first embodiment of the device according to the present invention.

Figs. 2 and 3 show, in a vertical longitudinal section and a horizontal section, respectively, through the hole in the containment body, a second embodiment of the device according to the present invention.

Referring to the accompanying Figures, the device according to the present invention is inserted in the conduit 7 for feeding fuel to the engine and consists of a containment body 1 and at least two shut-off elements 3 retained in the former by respective retaining elements 6.

The containment body 1 is traversed by a hole 2 passing also through the shut-off elements 3 at 4 and having at the ends connection elements for securing thereto the cut ends of the feed conduit 7.

The shut-off elements 3 are movable and can assume different configurations, only one of which permits the respective hole 4 to communicate with the hole 2 in the containment body 1 to restore the continuity thereof.

In this manner the device according to the present invention turns out to be a combination device and the fuel will flow through the present device only when all the holes 4 in the shut-off elements 3 communicate with the hole 2 in the containment body 1.

To avoid tampering, the path of the hole 2 in the containment body 1 is tortuous so that it will be impossible to introduce a rod-like element therein and move one shut-off element 3 at a time to permit it to be traversed by the rod-like element and find out the correct combination.

Also to avoid tampering, the various outer elements must be made of a sufficiently hard material so that they cannot be perforated by a normal drill. Further, the retaining elements 6 will be so conected to the containment body 1 that they can be removed only in a workshop and only after the device has been dismantled from the motor vehicle.

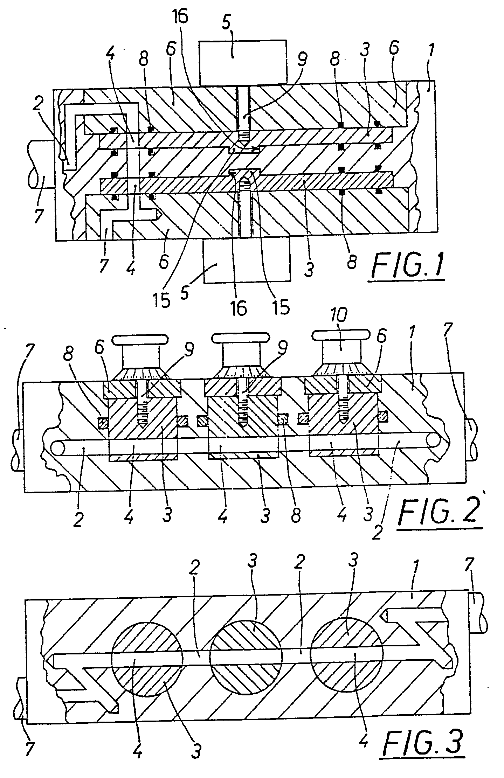

In the embodiment shown in Fig. 1, the containment body 1 has a cylindrical shape and the form of an "H" in axial section, with the disk-shaped shut-off elements 3 accommodated in the cavities of the "H" by means of a cylindrical projection 15 received in a corresponding recess 16.

In this case, the links 7 of the hole 2 in the containment body 1 are, one of them, perpendicular and the other parallel to the axis of the containment body 1. The holes 4 in the shut-off elements 3 are coaxial to each other and parallel to the axis of the containment body 1. To avoid tampering, the various sections of the hole 2 and of the holes 4 are connected to one another by sections forming acute or at the most right angles to one another.

In the embodiment of Figs. 2 and 3, the containment body 1 is a parallelepiped provided on one side with three aligned holes extending parallel to one another and in which respective cylindrical shut-off elements 3 are accommodated.

The holes 4 are diametrical relative to the associated shut-off member 3 whereas the hole 2 extends longitudinally of the containment body 1 and its end sections have a Z-shaped path.

As shown in Figs. 1 and 2, and as this device can be applied with excellent results to Diesel engines, sealing rings 8 are provided to avoid the escape of fuel because of the high pressure attained.

Thus, in both cases the shut-off elements 3 are rotatable around their axis.

Therefore, each shut-off element 3 has a respective stem 9 projecting from the respective retaining element 6.

A selector knob 10 provided with references adapted to indicate the various positions, which the respective shut-off element 3 may assume, may be mounted on each stem 9 (cf. Fig. 2).

Each stem 9 (cf. Fig. 1) may also be the output shaft of electronic drive means such as stepping motors 5 of a known type. In this case, the device according to the present invention turns out to be even more convenient and efficient as the controls of the motors 5 can be transferred to the interior of the passenger compartment of the motor vehicle. Anyhow also in this case a selector knob 10 may be provided which can be used in case of breakdown of the respective motor 5. It is also possible to provide for each shut-off element to be mechanically stable in each selected position thereof. This obviously serves the purpose of ensuring stability for each of the shut-off elements 3 in any condition of use of the vehicle.

If the device according to the present invention is mounted on a motor vehicle with carburettor petrol engine, it is preferable to insert a switch which opens the electric feed circuit of the engine when the combination is not the correct one so as to avoid the possibility of starting with the present device switched on and thus of the engine being stopped shortly after starting.

In a further embodiment (not shown) it is contemplated to form the containment body 1 of the device according to the present invention integrally with the body containing the pump of the fuel of the motor vehicle, so that it will be even more efficient and less liable to tampering. In some types of vehicles, the device described above can also be mounted on the tank containing the fuel.

Further, it would also be possible to construct the shut-off elements 3 in the form of cylinders translating in the interior of the containment body 2. In this case it would be evident that it could be contemplated that the cylinder could also rotate to permit a double combination by means of only one shut-off element.

The invention thus conceived is liable to numerous modifications and variations which all fall within the inventive concept. Further, all details can be replaced by technically equivalent elements, for example, the shut-off elements 3 may be slidable instead of being rotatable or they may be arranged in a manner completely different from what has been illustrated in the accompanying Figures.

## Claims

1. Combination device for cutting-off and restoring the flow of a fluid, in particular for motor vehicles with internal combustion engine, inserted in a line for feeding the fuel to the engine, comprising:

— a containment body (1) provided with a hole (2) having a tortuous path and adapted to restore the continuity of the fuel feed line;

— rotatable disk-shaped shut-off elements (3) provided with linear through holes (4) parallel to the axis of the disk-shaped elements (3), communicating with said hole (2) of said containment body (1) only when the respective shut-off elements (3) are in a predetermined position of a series of positions that each of them can assume independently of the other; characterized in that

— said shut-off disk-shaped elements (3) are out of contact and spaced from each other inside said containment body (1), in which they are mounted by means of a cylindrical projection (15) received in a corresponding recess (16) of said containment body (1), said shut-off disk-shaped elements (3) being wholly contained in said containment body (1) thereby being inaccessible from outside;

— between each of said shut-off disk-shaped elements (3) and the containment body (1) sealing means (8) are provided, located around said hole (4).

2. Safety device according to claim 1, characterized in that said containment body (1) is formed integrally or irremovably with the containment body of the pump for feeding fuel to the engine.

3. Safety device according to claim 1, characterized in that said containment body (1) is formed integrally or irremovably with the tank containing the fuel.

4. Safety device according to claim 1, characterized in that said shut-off elements (3) are responsive to electronic stepping means (5).

5. Safety device according to claim 1, for application to carburettor engines, characterized in that at least one of said shut-off elements (3) acts directly or indirectly on a switch inserted in the electric feed circuit of the engine.

6. Combination device for cutting-off and restoring the flow of a fluid, in particular for motor vehicles with internal combustion engine, inserted in a line for feeding the fuel to the engine, comprising:

— a containment body (1) provided with a hole (2) having a tortuous path and adapted to restore the continuity of the fuel feed line;

— rotatable cylindrical shut-off elements (3) provided with through holes (4) communicating with said hole (2) of said containment body (1) only when the respective shut-off elements (3) are in a predetermined position of a series of positions that each of them can assume independently of the other; characterized in that

— said shut-off cylindrical elements (3) are mounted also for translational movement within said containment body (1);

— said through holes (4) of said cylindrical shut-off elements (3) are linear holes parallel to or coinciding with a diameter of each cylindrical shut-off element;

— between each of said shut-off cylindrical element and the containment body (1) sealing means (8) are provided, located around said holes (4).

7. Safety device according to claim 6, characterized in that said containment body (1) is formed integrally or irremovably with the containment body of the pump for feeding fuel to the engine.

8. Safety device according to claim 6, characterized in that said containment body (1) is formed integrally or irremovably with the tank containing the fuel.

9. Safety device according to claim 6, characterized in that said shut-off elements (3) are responsive to electronic stepping means (5).

10. Safety device according to claim 6, for application to carburettor engines, characterized in that at least one of said shut-off elements (3) acts directly or indirectly on a switch inserted in the electric feed circuit of the engine.

## Patentansprüche

1. Kombinationsvorrichtung um einen Strömungsdurchfluss zu schliessen und zu öffnen, insbesondere für Kraftfahrzeuge mit Verbrennungsmotor, wobei die Vorrichtung in einer Brennstoffzuführungsleitung zu dem Motor angeordnet ist, bestehend aus:

einem Behälterkörper (1), der mit einer Öffnung (2) mit gewundenem Verlauf versehen ist, die geeignet ist, die Kontinuierlichkeit der Brennstoffzuführungsleitung wiederherzustellen;

scheibenförmigen drehbaren Absperrelementen (3), die mit linearen durchgehenden Löchern (4) versehen sind, die parallel zur Achse der scheibenförmigen Elemente (3) verlaufen und mit der Öffnung (2) in dem Behälterkörper (1) nur in Verbindung stehen, wenn die jeweiligen Absperrelemente (3) sich in einer vorbestimmten Stellung aus einer Reihe von Stellungen befinden, die jedes von ihnen unabhängig von den anderen annehmen kann;

dadurch gekennzeichnet, dass die scheibenförmigen Absperrelemente (3) innerhalb des Behälterkörpers (1) sich ausser Kontakt und im Abstand voneinander befinden und darin mittels eines zylindrischen Vorsprungs (15) gelagert sind, der in einer entsprechenden Ausnehmung (16) des Behälterkörpers (1) aufgenommen ist, wobei die scheibenförmigen Absperrelemente (3) vollständig in dem Behälterkörper (1) aufgenommen und somit von aussen unzugänglich sind;

zwischen jedem der scheibenförmigen Absperrelemente (3) und dem Behälterkörper (1) die Öffnung (4) umgebende Dichtungsmittel (8) vorgesehen sind.

2. Sicherheitsvorrichtung nach Anspruch 1, dadurch gekennzeichnet, dass der Behälterkörper (1) mit dem Behälterkörper der Pumpe zur Zuführung von Brennstoff zu dem Motor einstückig ausgebildet oder unbeweglich verbunden ist.

3. Sicherheitsvorrichtung nach Anspruch 1, dadurch gekennzeichnet, dass der Behälterkörper (1) mit dem den Brennstoff enthaltenden Behälter einstückig ausgebildet oder unbeweglich verbunden ist.

4. Sicherheitsvorrichtung nach Anspruch 1, dadurch gekennzeichnet, dass die Absperrelemente (3) auf elektronische Fortschaltmittel (5) ansprechen.

5. Sicherheitsvorrichtung nach Anspruch 1 zur Anordnung auf Vergasermotoren, dadurch gekennzeichnet, dass wenigstens eines der Absperrelemente (3) direkt oder indirekt auf einen Schalter einwirkt, der in dem elektrischen Stromzuführungskreis des Motors angeordnet ist.

6. Kombinationsvorrichtung um einen Strömungsdurchfluss zu schliessen und zu öffnen, insbesondere für Kraftfahrzeuge mit Verbrennungsmotor, wobei die Vorrichtung in einer Brennstoffzuführungsleitung zu dem Motor angeordnet ist, bestehend aus:

einem Behälterkörper (1), der mit einer Öffnung (2) mit gewundenem Verlauf versehen ist, die geeignet ist, die Kontinuierlichkeit der Brennstoffzuführungsleitung wiederherzustellen;

zylindrischen drehbaren Absperrelementen (3), die mit durchgehenden Löchern (4) versehen sind, die mit der Öffnung (2) in dem Behälterkörper (1) nur in Verbindung stehen, wenn die jeweiligen Absperrelemente (3) sich in einer vorbestimmten Stellung aus einer Reihe von Stellungen befinden, die jedes von ihnen unabhängig von den anderen annehmen kann;

dadurch gekennzeichnet, dass die zylindrischen Absperrelemente (3) in dem Behälterkörper (1) so angeordnet sind, dass sie auch eine Verschiebebewegung ausführen können;

die durchgehenden Löcher (4) der zylindrischen Absperrelemente (3) lineare Löcher sind, die parallel zu einem Durchmesser jedes der zylindrischen Absperrelemente verlaufen oder mit diesem Durchmesser zusammenfallen;

zwischen jedem der zylindrischen Absperrelemente und dem Behälterkörper (1) die Löcher (4) umgebende Dichtungsmittel (8) vorgesehen sind.

7. Sicherheitsvorrichtung nach Anspruch 6, dadurch gekennzeichnet, dass der Behälterkörper (1) mit dem Behälterkörper der Pumpe zur Zuführung von Brennstoff zu dem Motor einstückig ausgebildet oder unbeweglich verbunden ist.

8. Sicherheitsvorrichtung nach Anspruch 6, dadurch gekennzeichnet, dass der Behälterkörper mit dem den Brennstoff enthaltenden Behälter einstückig ausgebildet oder unbeweglich verbunden ist.

9. Sicherheitsvorrichtung nach Anspruch 6, dadurch gekennzeichnet, dass die Absperrelemente (3) auf elektronische Fortschaltmittel (5) ansprechen.

10. Sicherheitsvorrichtung nach Anspruch 6, dadurch gekennzeichnet, dass bei Anordnung der Vorrichtung auf Vergasermotoren wenigstens eines der Absperrelemente (3) direkt oder indirekt auf einen Schalter einwirkt, der in dem elektrischen Stromzuführungskreis des Motors angeordnet ist.

**Revendications**

1. Dispositif à combinaisons pour couper et restaurer le débit d'un fluide, en particulier pour véhicules à moteurs à combustion interne, inséré dans une ligne pour l'alimentation de combustible au moteur, comprenant:

— un corps de conteniment (1) pourvu d'un trou (2) ayant un parcours tortueux et apte à restaurer la continuité de la ligne d'alimentation du combustible;

— des éléments de coupe (3) tournants en forme de disques, pourvue de trous linéaires de passage (4) parallèles à l'axe des éléments (3) en forme de disques, communicant avec ledit trou (2) dudit corps de conteniment (1) seulement quand les élément de coupe respectifs (3) sont dans une position prédéterminée d'une série de positions que chacun d'eux peut assumer indépendamment de l'autre; caractérisé en ce que

— lesdits éléments de coupe (3) en forme de disques sont hors de contact et espacés l'un de l'autre à l'intérieur dudit corps de conteniment (1) dans lequel ils sont montés au moyen d'une saillie cylindrique (15) accueillie dans une cavité correspondante (16) dudit corps de conteniment (1), lesdits éléments de coupe (3) en forme de disques étant complètement contenus dans ledit corps de conteniment (1) de manière à être inaccessibles de l'extérieur;

— entre chacun desdits éléments de coupe (3) en forme de disques et le corps de conteniment (1) sont prévus des moyens d'étanchéité (8) situés autour dudit trou (4).

2. Dispositif de sécurité suivant la revendication 1, caractérisé en ce que ledit corps de conteniment (1) est solidaire avec ou inamovible du corps de conteniment de la pompe de l'alimentation au moteur.

3. Dispositif de sécurité suivant la revendication 1, caractérisé en ce que ledit corps de conteniment (1) est solidaire avec ou inamovible du réservoir contenant le combustible.

4. Dispositif de sécurité suivant la revendication 1, caractérisé en ce que lesdits éléments de coupe (3) réagissent à des moyens d'avancement électroniques (5).

5. Dispositif de sécurité suivant la revendication 1, pour l'application à des moteurs à carburateur, caractérisé en ce qu'au moins un desdits éléments de coupe (3) agit directement ou indirectement su un interrupteur inséré dans le circuit électrique d'alimentation du moteur.

6. Dispositif à combinaisons pour couper et restaurer le débit d'un fluide, en particulier pour véhicules à moteurs à combustion interne, inséré dans une ligne pour l'alimentation de combustible au moteur, comprenant:

— un corps de conteniment (1) pourvu d'un trou (2) ayant un parcours tortueux et apte à restaurer la continuité de la ligne d'alimentation du combustible;

— des éléments de coupe cylindriques tournants (3) pourvus des trous de passage (4) communicant avec ledit trou (2) dudit corps de conteniment (1) seulement quand les éléments de coupe respectifs (3) sont dans une position prédéterminée d'une série de positions que chacun d'eux peut assumer indépendamment de l'autre; caractérise en ce que

— lesdits éléments de coupe cylindriques (3) sont montés également pour un mouvement de translation à l'intérieur dudit corps de conteniment (1);

— lesdits trous de passage (4) desdits éléments de coupe cylindrique (3) sont des trous linéaires parallèles ou coïncidant avec un diamétre de chacun élément de coupe cylindrique;

— entre chacun desdits éléments de coupe cylindriques et le corps de conteniment (1) sont prévus des moyens d'étanchéité (8) situés autour desdits trous (4).

7. Dispositif de sécurité suivant la revendication 6, caractérisé en ce que ledit corps de conteniment (1) est solidaire avec ou amovible du corps de conteniment de la pompe pour l'alimentation du combustible au moteur.

8. Dispositif de sécurité suivant la revendication 6, caractérisé en ce que ledit corps de conteniment (1) est solidaire avec ou inamovible du réservoir contenant le combustible.

9. Dispositif de sécurité suivant la revendication 6, caractérisé en ce que lesdits éléments de coupe (3) réagissent à des moyens d'avancement électroniques (5).

10. Dispositif de sécurité suivant la revendication 6, pour l'application à des moteurs à carburateur, caractérisé en ce qu'au moins un desdits éléments de coupe (3) agit directement ou indirectement sur un interrupteur inséré dans le circuit électrique d'alimentation du moteur.

FIG.1

FIG.2

FIG.3